# EUROPEAN PATENT SPECIFICATION

(11) **EP 1 061 402 B1**
(45) Date of publication and mention of the grant of the patent: **22.12.2004**
(21) Application number: 00304928.5
(22) Date of filing: 09.06.2000
(51) Int. Cl.: G02F 1/13, C08L 63/00, C08G 59/66, C08G 59/40, C08G 59/68, C08K 3/00, C08K 5/00, C08G 59/20

(54) **Sealing material for liquid crystal display using plastic substrate**
Dichtungsmasse für Flüssigkristallanzeigevorrichtung mit Kunstoffsubstrat
Matière d'étanchéité pour cellule à cristal liquide avec un substrat plastique

(30) Priority: 16.06.1999 JP 17036299
(43) Date of publication of application: 20.12.2000
(73) Proprietor: Ricoh Company, Ltd., Tokyo 143-8555 (JP)
(72) Inventor: Kamoi, Sumio, Tokyo (JP); Nakajuu, Asami, Kanagawa (JP)
(74) Representative: Lamb, Martin John Carstairs

(56) References cited:
- PATENT ABSTRACTS OF JAPAN vol. 1997, no. 05, 30 May 1997 (1997-05-30) -& JP 09 012676 A (SUMITOMO BAKELITE CO LTD), 14 January 1997 (1997-01-14)
- PATENT ABSTRACTS OF JAPAN vol. 1997, no. 05, 30 May 1997 (1997-05-30) -& JP 09 015611 A (SUMITOMO BAKELITE CO LTD), 17 January 1997 (1997-01-17)

## Description

### BACKGROUND OF THE INVENTION

### 1. Field of the Invention

The present invention generally relates to a sealing material which is suitable for a liquid crystal display using a plastic substrate and which has good adhesion and flexibility against the plastic substrate, and liquid crystal-resistance.

The present invention also relates to a liquid crystal display device which is formed of the plastic substrate by use of the sealing material, and to a method for manufacturing the same.

### 2. Description of the Related Art

A liquid crystal display device has been used in wide variety of fields, for example, as a display for a personal computer and a word-processor because this display is thin, light and compact in size as well as economical due to small energy consumption. Although most liquid crystal display devices comprise a liquid crystal cell provided on a glass as a substrate, recently, there has been increasingly used liquid crystal display devices which utilize a plastic film as the substrate according to need of a light and nondestructive device with development of the liquid crystal cell attachment to, so-called, a mobile apparatus.

The liquid crystal display device can be made by sealing a liquid crystal material between substrates of the device by use of a sealing material. It is required that the sealing material has good adhesive strength with which the liquid crystal display device can not be destructed by stress acting on the device. In addition, since the sealing material is always brought into contact with liquid crystal molecules directly, the sealing material is required to have a property by which the liquid crystal molecules are not adversely affected. Besides the above, because a need exists for a curved display as the liquid crystal display which employs the plastic substrate, it is necessary for the sealing material to have flexible character. Recently, in particular, with expansion of mobile applications, there has been a long felt need for an excellent heat-resistant sealing material, as comparing to the conventional sealing materials.

Although it is customary to use a thermosetting epoxy resin in the sealing material of the liquid crystal display device, the liquid crystal display based on the plastic substrate has drawbacks that heat-resistance thereof is lower than that of the liquid crystal display based on the glass substrate, because the plastic substrate itself has lower heat-resistance than that of the glass substrate and curing temperature used in the liquid crystal display based on the plastic substrate is not set to the same temperature as that of the liquid crystal display based on the glass substrate. In a film-based liquid crystal display device, it is required that the film-based liquid crystal display device has a good flexible property, although it is not necessary for a glass-based liquid crystal display device to have this property. Thus, there has been used a sealing material in the film-based liquid crystal display device different from that used in the glass-based liquid crystal display device, and curing operation of the sealing material used in the film-based liquid crystal display can be carried out at a lower temperature in comparison with curing temperature of the glass-based liquid crystal display device. Due to lower temperature of curing operation in the film-based liquid crystal display device, comparing to that employed in the glass-based liquid crystal display device, when the film-based liquid crystal display device is stored in a high temperature, the sealing material can be mixed with liquid crystals so as to swell, so that the adhesive strength of the sealing material can be decreased and operation failure occurs due to an increase in a switching current of the liquid crystal by the sealing material, thereby giving rise to problems relating to liquid crystal-resistance of the sealing material. There has been a need for a reliable sealing material which eliminates the above problems.

To solve the above-mentioned problems, there has been proposed a sealing material which comprises a epoxy resin based on a polyol type as the sealing material for the film-based liquid crystal display device, as disclosed in Japanese Patent Publication No. 2129470 which corresponds to Japanese Patent Publication No.6-90379. The flexibility and adhesive strength of the sealing material can be attained by use of the above epoxy resin, but when the liquid crystal cell is preserved at a temperature of 80 °C or more, the sealing material can swell and the switching current value of the liquid crystal can be gradually increased.
Therefore, the sealing material described in Japanese Patent Publication No. 2129470 has an insufficient heat-resistance. Furthermore, as disclosed in Japanese Laid-Open Patent Application No. 9-12679, there has been proposed another sealing material comprising, as a main component: 10 to 50 parts by weight of a silicone-modified epoxy compound which is liquid at room temperature; 90 to 50 parts by weight of an epoxy resin based on bisphenol, the epoxy resin being liquid at room temperature; 20 to 80 by weight of a tri-functional thiol hardening agent which is liquid at room temperature; 0.5 to 5.0 parts by weight of a silane coupling agent; 1 to 10 parts by weight of an amorphous silica having an average particle size of 2 µm or less; and 5 to 50 parts by weight of an inorganic filler other than the amorphous silica, the inorganic filler having an average particle size of 2 µm or less. However, when the liquid crystal cell sealed by the above-mentioned sealing material is stored at 80 °C temperature or more, the switching current value of the liquid crystal can also be increased little by little, so that the heat-resistance for the sealing material is not sufficient for practical use.

As a composition of the sealing material for manufacturing the liquid crystal cell, Japanese Laid-Open Patent Application No. 9-15611 discloses a sealing material comprising, as an epoxy resin component: (a) 10 to 50 parts by weight of polyethyleneglycol glycidyl ether which is liquid at room temperature; (b) 90 to 50 parts by weight of an epoxy resin derived from a bisphenol compound, the above epoxy resin being liquid at room temperature; as a hardening agent for the epoxy resin, (c) 20 to 80 parts by weight of a tri-functional thiol compound which is liquid at room temperature; as a further additional component, (d) 0.5 to 5.0 parts by weight of a silane coupling agent; (e) 1 to 10 parts by weight of an amorphous silica having an average particle size of 1 µm or less; and (f) 5 to 50 parts by weight of an inorganic filler other than the amorphous silica, the inorganic filler having an average particle size of 2 µm or less. A hardened material comprising the above (a), (b) and (c) components has advantages that this hardened material exhibits a good flexibility and high adhesion for the film substrate. However, there is arisen the problems that the switching current value of the liquid crystal can be increased during a high temperature storage testing at 80 °C temperature or more, thereby diminishing the reliability of the liquid crystal display device.

A hardened compound formed of the sealing material has a strong influence on performance of liquid crystal display device. For example, since a material having an active and functional group may be contained in the liquid crystal material, there may be occasions that an ionic component or a low molecular weight compound contained in the sealing material may precipitate in the liquid crystal material, thereby increasing a consumption current, absorbing an atmospheric moisture and swelling the hardened sealing material. An electrical connection failure may occur at a hardened sealing material through which an ITO electrode of an upper substrate is connected with an ITO electrode of a lower substrate.

In addition, when the sealing material which contains a metal particle is used for a display panel structure in which the ITO electrode of the upper substrate is connected with another ITO electrode of the lower substrate through the hardened sealing material at the same side, so as to extend both the electrodes towards one side of the panel, a conventional sealing material may induce a display failure during storage test under the conditions of a high temperature and a high humidity, because the metal particle enables the connection resistance at the hardened sealing material between the upper and the lower ITO electrodes to be increased.

### SUMMARY OF THE INVENTION

Accordingly, it is a general object of the present invention to provide a sealing material in which the disadvantages of the aforementioned prior art are eliminated.

A first object of the present invention is to provide a sealing material for use in a liquid crystal display device, which has good flexibility in conformity with curling of a plastic film substrate and good adhesion for the plastic film under the conditions that a liquid crystal cell is manufactured at a high temperature, and which is an excellent liquid crystal-resistance.

A second object of the present invention is to provide a liquid crystal display device which has a high reliability by using the sealing material according to the present invention.

A third object of the present invention is to provide a method for manufacturing a liquid crystal display device which has a high reliability by use of the sealing material according to the present invention.

The first object of the present invention can be achieved by a sealing material for use in a liquid crystal display device using a plastic substrate, the sealing material comprising an epoxy component and a hardening agent component,
the epoxy component comprising:
a first epoxy resin derived from a bisphenol derivative;
   and
a filler material having an average particle size of 2 µm or less and comprising more than at least one species, and
the hardening agent comprising:
a multi-functional thiol-type compound having an
isocyanurate skeleton;
a tertiary amine compound as a reactive catalytic material; and
a silane coupling agent, characterized in that the epoxy component comprises a second epoxy resin derived from an alcohol compound having a bisphenol skeleton within its molecule, wherein a mixture weight ratio of said first epoxy resin to said second epoxy resin is in a range from 90/10 to 60/40. The second object of the present invention can be achieved by a liquid crystal display device in which a liquid crystal material is packed between a pair of substrates, at least one of the substrates being a plastic substrate, a periphery of the liquid crystal material sealed by a sealing material, the sealing material comprising an epoxy component and a hardening agent component:
The epoxy component comprising:
a first epoxy resin derived from a bisphenol derivative; and
a filler material having an average particle size of 2 µm or less, the filler material comprising more than at least one species; and
the hardening agent component comprising:
a multi-functional thiol-type compound having an isocyanurate skeleton;
a tertiary amine compound as a reactive catalytic material; and
a silane coupling agent, characterized in that the epoxy component comprises a second epoxy resin derived from an alcohol compound, said second epoxy resin having a bisphenol skeleton within its molecule, wherein a mixture weight ratio of said first epoxy resin to said second epoxy resin is in a range from 90/10 to 60/40.

The third object of the present invention can be achieved by a method for manufacturing a liquid crystal display device having at least two substrates comprising a first substrate and a second substrate, at least one substrate being a plastic substrate, the method comprising the steps of:
forming a ITO electrode provided on the first and the second substrates in a desired pattern;
forming an orientation film on the ITO electrode;
rubbing the orientation film;
spraying a spherical particle as a spacer onto the first substrate
screen-printing a sealing material on the second substrate;
prebaking the sealing material;
superimposing the first substrate with the second substrate to form superimposed substrates with the sealing material therebetween;
pressing the superimposed substrates with a given pressure; and
baking the sealing material between the superimposed substrates while pressing the superimposed substrates with the given pressure,
wherein the sealing material comprising an epoxy component and a hardening agent component:
the epoxy component comprising:
   a first epoxy resin derived from a bisphenol derivative;
   a second epoxy resin derived from an alcohol compound, the second epoxy resin having a bisphenol skeleton within its molecule, wherein a mixture weight ratio of said first epoxy resin to said second epoxy resin is in a range from 90/10 to 60/40,
a filler material having an average particle size of 2 µm or less and comprising more than at least one species; and
a polymeric particle which undergoes a gelation reaction, and
the hardening agent component comprising:
   a multi-functional thiol-type compound having an isocyanurate skeleton;
   a tertiary amine compound as a reactive catalytic material; and
   a silane coupling agent, and further wherein a temperature of the prebaking step is higher than that of gelation commencement of the polymeric particle.

According to the present invention, a method is disclosed for manufacturing a liquid crystal display device having at least two substrates comprising a first substrate and a second substrate, at least one substrate being a plastic substrate, the method comprising the steps of:
forming a ITO electrode provided on the first and the second substrates in a desired pattern;
forming an orientation film on the ITO electrode;
rubbing the orientation film;
spraying a spherical particle as a spacer onto the first substrate
screen-printing a sealing material on the second substrate;
prebaking the sealing material;
superimposing the first substrate with the second substrate to form superimposed substrates with the sealing material therebetween;
pressing the superimposed substrate with a given pressure;
baking the sealing material between the superimposed substrates while pressing the superimposed substrates with the given pressure; and
releasing the given pressure from the superimposed substrates to form the liquid crystal display device,
wherein the sealing material comprising an epoxy component and a hardening agent component:
the epoxy component comprising:
   a first epoxy resin derived from a bisphenol derivative;
   a second epoxy resin derived from an alcohol compound, the second epoxy resin having a bisphenol skeleton with its molecule wherein a mixture weight ratio of said first epoxy resin to said second epoxy resin is in a range from 90/10 to 60/40.
a filler material having an average particle size of 2 um or less and comprising more than at least one species; and
The hardening agent component comprising:
a multi-functional thiol-type compound having an isocyanurate skeleton;
a tertiary amine compound as a reactive catalytic material; and
a silane coupling agent, and
Further wherein a temperature of the releasing step is lower than a glass transition temperature of a hardened material comprising the sealing material.

An advantage of the present invention is that the sealing material according to the present invention has good adhesion against the plastic film substrate as well as good liquid crystal-resistance.

Another advantage of the present invention is that the sealing material according to the present invention provides a high reliable liquid crystal display device which has the plastic substrate and which has a display panel structure in which an ITO electrode of an upper substrate and an ITO electrode of a lower substrate are connected through a hardened sealing material comprising the sealing material according to the present invention, although the conventional sealing material results in connection failure between the ITO electrodes in the above display panel structure.

### BRIEF DESCRIPTION OF THE DRAWING

Other objects, features and advantages of the present invention will become more apparent from the following detailed description when read in conjunction with the accompanying drawings, in which:
FIG. 1 illustrates a cross sectional view of a liquid crystal display device sealed by a sealing material according to the present invention;
FIG. 2 shows results of adhesion vs a mixture ratio of epoxy components; and
FIG. 3 shows a change in resistivity of a liquid crystal material vs a mixture ratio of epoxy components.

### DESCRIPTION OF THE PREFERRED EMBODIMENTS

The inventors of the present invention have extensively investigated the problems of the conventional sealing material. As a result of the intensive studies on the sealing material, the inventors of the present invention have discovered that a sealing material comprising a combination of specific epoxy resins and a specific thiol-type compound as a hardening agent, eliminates the above-mentioned problems.

In order to make a hardened material formed of the epoxy resin liquid crystal-resistant, it is possible to use an epoxy resin derived from bisphenol drivative (hereinafter referred to as EPOXY 1) as shown in the following formulae.

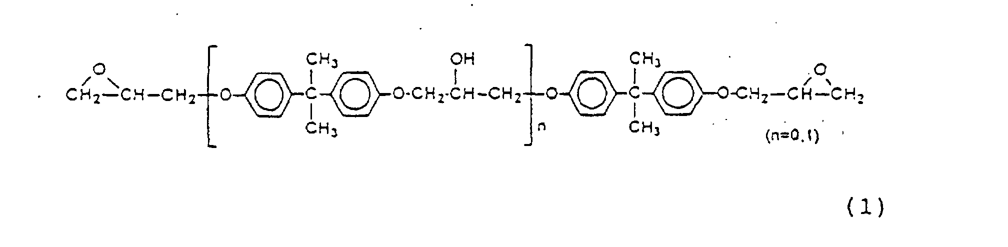

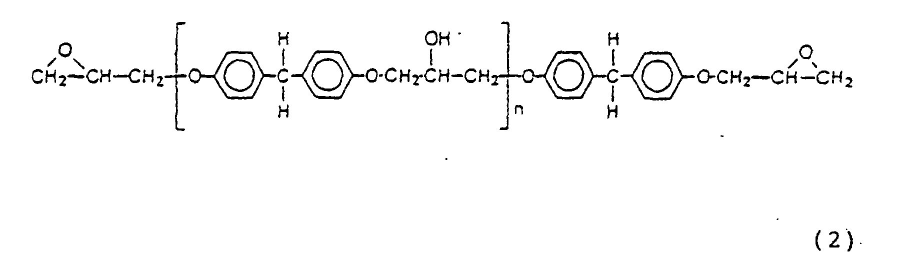

In order to obtain high adhesion and peel strength against a plastic film substrate, as disclosed in Japanese Patent Publication No. 2129470, epoxy resin derived from alcohol compounds (hereinafter referred to as EPOXY 2) having the following formulae (3) to (6) exhibit the high adhesion and the peel strength.

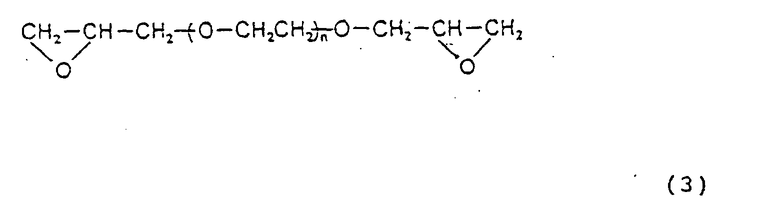

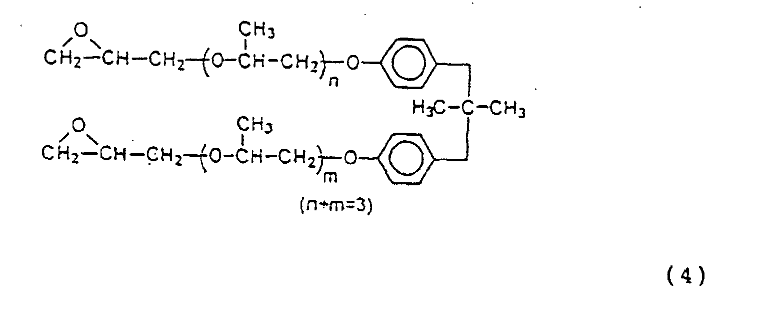

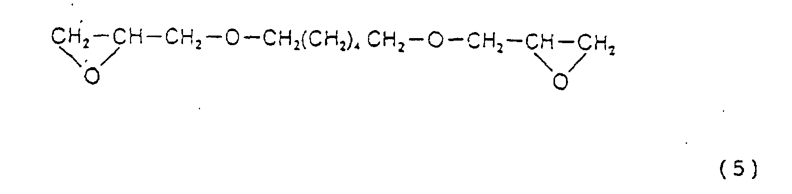

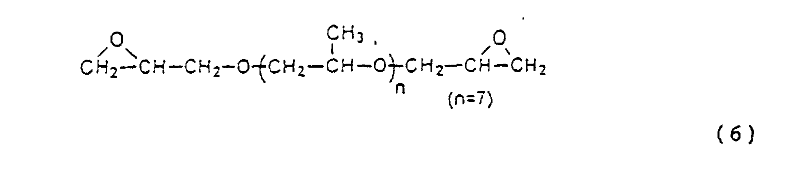

Hardened materials formed of EPOXY 2 usually have a poor liquid crystal-resistance. In the course of study on the properties of the hardened materials comprising a mixture of EPOXY 1 and EPOXY 2, increase of EPOXY 1 having the above formulae (1) and (2) in a mixture ratio of the epoxy resin provides good liquid crystal-resistance, although accompanying inability to provide the good adhesion. Increase in the mixture ratio of EXPOXY 1 in the total epoxy resin reduces the adhesion, but the liquid crystal-resistance can be improved. Conversely, increasing the mixture ratio of EPOXY 2 in the total epoxy resin reduces the liquid crystal-resistance, but the adhesion is ameliorated. Accordingly, it is though that a formulation comprising EPOXY 1 and EPOXY 2 can be optimized to satisfy the above both properties. In addition, it is found that an alcohol-derived epoxy resin having a bisphenol skeleton as indicated in the above formula (4) does not induce significant loss of the liquid crystal-resistance. Even if a high content of the above alcohol-derived epoxy resin is contained in the total epoxy resin, the adhesion of the hardened material can not be deteriorated noticeably.

From these results, a sealing material comprising a mixture of the epoxy resin derived from the bisphenol derivative (EPOXY 1) and the alcohol-derived epoxy resin having the bisphenol skeleton within its molecule (formula (4) of EPOXY 2), as a main component, exhibits the good adhesion against the film substrate and the good liquid crystal-resistance. It is also found that a weight ratio of the epoxy resin derived from the bisphenol derivative to the alcohol-derived epoxy resin having the bisphenol skeleton within its molecule is between 90/10 and 60/40, preferably between 80/20 and 70/30.

As a hardening agent for the above epoxy resin mixture, aliphatic amines and tertiary amines can not be employed because a pot life thereof as the hardening agent is short and the hardened material formed of the above epoxy resin with these amines shows the poor liquid crystal-resistance, thereby providing inability to put into practical use. In addition, because aromatic amines is very toxic and is typically in a solid state at room temperature, and a temperature thereof required for thermosetting is high, it is difficult to use as the hardening agent for the epoxy resin in a case of the film-based liquid crystal display. With acid anhydrides and imidazoles as the hardening agent, it is necessary to harden the epoxy resin at a high temperature, so that these agents are not suitable for the film-based liquid crystal display. For a one-pack hardening agent (dicyandiamide(DICY)), hydrazides, a imidazole-modified latent hardening agent, a polyamine-modified latent hardening agent and urea adduct-based latent hardening agent which have been used and being under consideration for practical use as the hardening agent for a glass-based liquid crystal display, it is necessary to harden at a temperature of 100 °C or more so that these agents are not suitable for the film-based liquid crystal display. Addition of a tertiary amine-based hardening material into the polythiol-based material allows the epoxy resin to be hardened at lower temperature. However, it is difficult to adjust the pot life of the above combination as the hardening agent as well as to obtain the liquid crystal-resistance.

The inventors of the present invention have found that tri-functional poly-thiol having an isocyanurate skeleton, for example, tris(2-hydroxyethyl)isocyanurate-tris(3-mercaptopropionate) having the following structural formula (7), exhibits an excellent hardening agent for the liquid crystal display device using the plastic film substrate. Addition of a catalytic amount of the above poly-thiol agent into the sealing material allows a hardening rate of the epoxy resin to be adjusted easily without significant loss of the liquid crystal-resistance.

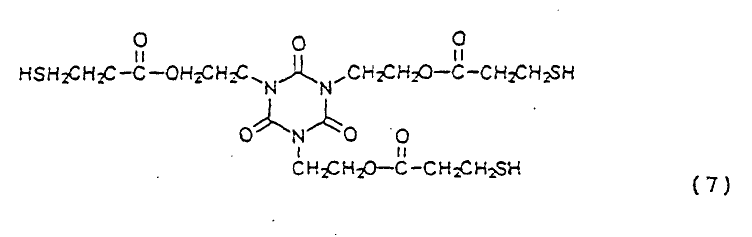

With the above thiol-based hardening agent, addition of a catalytic amount of tertiary amine enables hardening of the epoxy resin to be accelerated. The larger addition amount is, the lower hardening reaction temperature occurs and the shorter reaction time is.

Therefore, it is preferred that the hardening agent according to the present invention includes a mixture of tertiary amine and tri-functional poly-thiol having the isocyanurate within its molecule, such as tris(2-hydroxyethyl)isocyanurate-tris(3-mercaptopropionate). Examples of tertiary amine used in the present invention include 2,4,6-tri(dimethylamino)-methylphenol and a salt of 2,4,6-tri(dimethylamino)-methylphenol and an acid, such as octyl acid and carboxylic acid or the like. It should be noted that a decrease in an amount of tertiary amine induces retardation of the hardening reaction so that a degree of hardening is insufficient under the conditions of baking operation. Conversely, too large amount of tertiary amine causes the epoxy resin to be hardened at room temperature, thereby shortening the pot life as the hardening agent and thus giving rise to the problems relating to the productivity.

It is essential to add a filler material into the sealing material in order to obtain adaptation for screen-printing process. Examples of the filler materials include titanium oxide, silica, alumina, calcium carbonate or the like. Calcium carbonate has the problems that this compound has a high specific gravity and it is likely to precipitate in a storage state of the sealing material. As the filler material, preference is given to silica, titanium oxide and alumina. These filler material are used alone or in combination. It is possible to add the filler material into the epoxy component or into the hardening agent component or both of the foregoing. It is desirable that homogenizer or three rolls mill are used for addition of the filler material into the epoxy component or the hardening agent component. An addition amount of the filler material is preferably between 5 and 70 parts by weight, relative to 100 parts by weight of the epoxy component or the hardening agent component.

A silane coupling agent can also be added into the sealing material in order to modify a surface of the substrate, to obtain an improvement of adhesion between the substrate and the sealing material and to enhance the liquid crystal-resistance. Examples of the silane coupling agent include γ-glycidoxypropyl trimethoxysilane, γ-glycidoxypropyl triethoxysilane, γ-glycidoxypropyl methyl diethoxysilane, β-(3,4-epoxycyclohexyl)ethyl trimethoxysilane, γ-aminopropyl trimethoxysilane and N-*β*-(aminoethyl) γ-aminopropyl trimethoxysilane or the like. The silane coupling agent is added in an amount of from 0.5 to 20 parts by weight, relative to 100 parts by weight of the epoxy resin, more preferably 1 to 10 parts by weight.

As can be clear from the above-mentioned technical teachings, the sealing material according to the present invention for use in liquid crystal display device which employs the plastic substrate comprises the following components:
(1) the epoxy resin component as a main component comprising:
   the epoxy resin derived from the bisphenol derivative (EPOXY 1);
   the alcohol-derived epoxy resin (EPOXY 2) having a bisphenol skeleton within its molecule; and
   the filler material having a particle size of 2 µm or less and comprising at least one species; and
(2) the hardening agent component comprising:
   the multi-functional thiol-type compound having an isocyanurate skeleton;
   the tertiary amine compound as a reactive catalytic material; and
   the silane coupling agent.

A reaction of the epoxy resin component with the hardening agent component is initiated by heating the sealing material, and then the viscosity of the sealing material reduces. After that, hardening reaction proceeds to increase its viscosity. As explained above, upon heating the sealing material, the viscosity thereof is lowered one time, allowing the sealing material to flow and thus leading to the problems that a position of the sealing material can not be fixed against the substrate, that is, spread of the sealing material. In general, to avoid the above problems, it is possible to use a fine polymeric particle, for example, a primary particle size being a few nanometers. However, in the liquid crystal display having a small gap of 6 µm or less, this does not eliminate the above problems. As an alternative, after superimposing the upper and lower substrates, these superimposed substrates are allowed to stand at room temperature for a long time or are subjected to prebaking treatment at a temperature of 40 °C or less for a long time. These alternatives result in a poor productivity.

In general, a gelation reaction can easily proceed for a few seconds at a higher temperature than commencement temperature for the gelation. Taking the curling of the plastic film substrate into consideration, prebaking operation at a temperature of 100 °C or more for more than one minutes cause the hardening reaction to be overrun, thereby leading to occurrence of adhesive failure. This is because that prebaking operation is performed at a temperature less than 100 °C.

Under these circumstances, there has been proposed a method of preventing a flow of the sealing material with lowering of the viscosity, in which a polymeric particle is contained in the sealing agent, as discloses in Japanese Patent Publication No. 7-53855 and Japanese Laid-Open Patent Application No. 5-271333. The gelation reaction of this polymeric particle proceeds at a temperature of less than 100 C. In these documents, the polymeric particle was used for the purpose of modification of thermosetting resin. Examples of such polymeric particle include an acrylate-based particle, a vinyl chloride-based particle, a styrene-based particle or the like. From the viewpoint of material stability, it is desirable to use the acrylate-based particle, more specifically, poly(methyl methacrylate)(hereinafter referred to as PMMA) particle.

Also in the present invention, it is possible to add the above polymeric particle into either the epoxy resin component or the hardening agent component. After screen-printing the sealing material, prebaking of the sealing material containing the polymeric particle can be carried out at a higher temperature than a commencement temperature for gelation of the polymeric particle, but less than 100 °C, so as to increase the viscosity of the sealing material. After that, superimposing of two substrates is performed and baking operation can then be carried out, while preventing the flow of the sealing material, thereby eliminating the problems relating to spread of the sealing material.

As the polymeric particle, preference is given to a fine particle of PMMA in a core-shell form, which contains a rubber material inside the polymeric particle. It should be understood that addition of the above PMMA into the sealing material according to the present invention induces a strong adhesion against the plastic substrate. For example, the sealing material containing the PMMA particle exhibited 20 % increase in adhesive strength in terms of peel strength at 90 °C, as compared to the sealing material having no PMMA particle. It may be appreciated that the above phenomenon is due to a micro phase separation structure in which PMMA in the core-shell form can be dispersed in the hardened epoxy resin to form an island structure, so as to strengthen the hardened epoxy resin. This is an effective method for improving the adhesive strength.

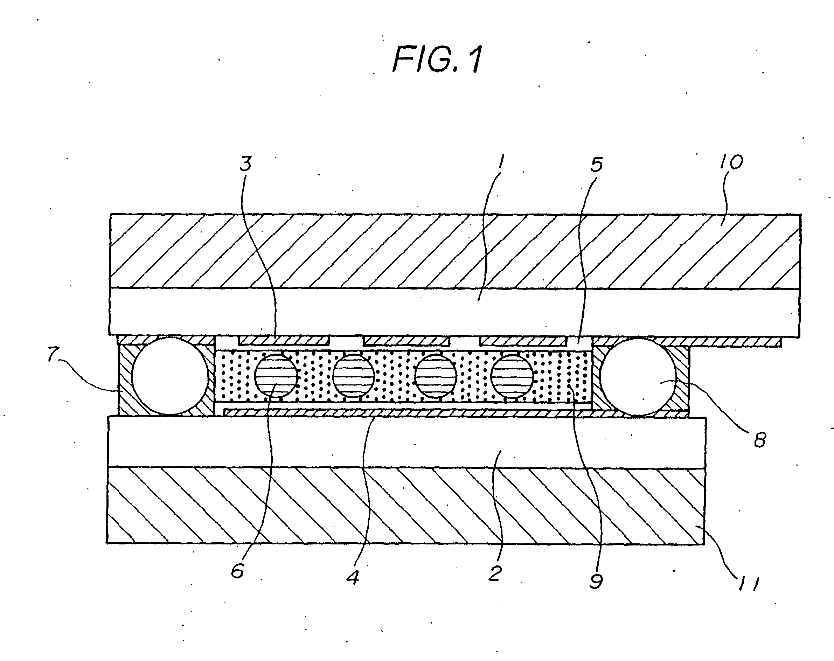

Referring to FIG.1, there is shown a cross-sectional view of the liquid crystal display device according to the present invention. The liquid crystal display device comprises at least one plastic film substrate 1 or 2, an ITO electrode 3 or 4 provided on the plastic substrate 1 or 2, an orientation film 5 provided on the substrate 1, a spherical particle which is referred to as a gap agent 6 as a spacer, an liquid crystal material 9 packed between the substrates 1, 2 and the sealing material 7 according to the present invention by which a periphery of the substrates is sealed. A plastic particle 8 covered with a metal, such as gold, provides an electrical connection between the upper and lower ITO electrodes 3, 4. Furthermore, as described in detail below, polarizing plates 10 and 11 are attached onto the substrates 1 and 2 to form the liquid crystal display device.

The liquid crystal material can be prepared by varying kinds of materials, mixture ratio thereof or the like, according the requirement properties for the liquid crystal display, for example, a duty ratio, a drive voltage and a response rate, so as to form a mixture of about ten species of the liquid crystal material.

By the way, recently, a light and thin-type personal terminal device has been produced increasingly, for example, a cellular phone, a personal handy-phone, a card pager or the like. As the liquid crystal material having properties required for these devices, it is necessary to use super twisted nematic (STN)-type liquid crystal having a low drive voltage, a high speed response and the duty ratio being between 1/16 and 1/64. For example, in the liquid crystal material for a high duty purpose (more than 1/100 duty), it is required to have the drive voltage of 1.5 V or more and Δε (dielectric anisotropy) of 10 or less.

In a case where the liquid crystal material which has the drive voltage of 1.5 V or more and Δε of 10 or less was used for the liquid crystal display, even when a known sealing material described in Japanese Laid-Open Patent Application No.9-15611 was used in a reliability test where waiting and activating test of the liquid crystal display was conducted at a higher temperature of 80 °C or more, and at a higher temperature of 60 °C or more and a higher humidity of 90 % or more, there may be arisen the problems that the consumption current value was increased and the orientation failure occurred with decrease in resistivity value of the liquid crystal due to being sensitive to a surrounding material under the conditions that it was required to drive at the low voltage and at the high speed operation as stated above, although there did not occur the problems, such as increase in the consumption current and orientation failure under the conditions that it was not required to drive at the low voltage and at the high speed operation. It was found that use of the sealing material according to the present invention allows the above-mentioned problems to be resolved.

Examples of the plastic film substrate used in the present invention include a polycarbonate film, a polyethersulfone film, a polysulfone film or the like. However, because the substrate itself does not have a sufficient properties, such as gas barrier ability and solvent-resistance or the like, one side or both sides of the substrate are provided with inorganic or organic coating layers which are used as a gas barrier layer or a protecting layer, and then an ITO film is provided thereon. A thickness of the substrate is between 0.1 and 0.3 mm in total.

From the viewpoint of cost in the substrate and improvement of the gas barrier property, recently, as a new improved substrate, an inorganic barrier layer (SiO₂) is deposited on an opposite side of the film substrate to a side provided with the ITO electrode and a thin organic coating having a thickness of about 5 µm is formed on the ITO electrode. Although a sufficient adhesive strength can not be obtained by use of conventional sealing material in this substrate due to presence of the thin organic layer with which the sealing material comes into direct contact, the use of the sealing material according to the present invention provides the sufficient adhesive strength in the new improved substrate.

The following will be a description of a method for manufacturing the liquid crystal display device according to the present invention. The method for manufacturing the display in which at least two substrates are used, at least one substrate being a plastic film substrate, includes the steps of forming an ITO electrode on the plastic film substrate in a desired pattern, forming an orientation film on the ITO electrode and the plastic film substrate, rubbing the orientation film, spraying a spherical particle as a spacer onto one substrate having the orientation film provided on the ITO electrode, screen-printing a sealing material according to the present invention on anther substrate, prebaking the sealing material, superimposing both the substrates to form a superimposed substrates, pressing the superimposed substrates with a given pressure, and baking the superimposed substrates with the given pressure. After the above steps, the pressure is released. There may be occasions that if a temperature of the releasing step is carried out at a higher temperature than a glass transition temperature (hereinafter referred to as Tg) of the hardened material formed of the sealing material, the connection resistance at the hardened sealing material between the upper and the lower ITO electrodes may be increased. Since this results in low manufacturing yields, it is preferable to release the pressure at a lower temperature than Tg of the hardened material formed of the sealing material.

A coating step of the sealing material according to the present invention can be carried out by the screen-printing method. A thickness of the sealing material is dependent on the viscosity of the sealing material. When the viscosity of the sealing material is too low, spread of the sealing material happens right after the screen-printing. On the other hand, when the viscosity of the sealing material is too high, it is likely that meshes of a screen-printing plate are clogged with the sealing material. The viscosity of the sealing material comprising the epoxy resin and the hardening agent must be controlled in order to obtain an uniform width of the sealing material as well as to be suitable for the screen-printing method. It is preferred that the viscosity of the sealing material according to the present invention is between 70 and 130 Pa·s/2.5rpm at a temperature of 25°C.

Conditions for the baking of the sealing material can be determined in consideration of heat-resistant property and dimensional stability of the film substrate, a substrate deformation under influences of heat and pressure, and productivity of the liquid crystal display. It is preferred that a temperature of the baking is less than 60 °C and a time required therefor is less than 6 hours. Under these conditions the sealing material according to the present invention is required to harden to some extent. The term "to some extent" herein includes an extent to which an air bubble can not enter into an inside of the sealing material when the pressure is released after the baking operation. An extent of hardening is quantitatively estimated on the basis of a gelation time on a hot plate heated at 150 °C. The gelation time is preferably between 240 and 360 seconds. When this time is less than 240 seconds, the pot life of the sealing material becomes short, that is to say, less than 2 hour at room temperature, thereby providing an undesirable result. When the above time is more than 360 seconds, it is impossible to harden the sealing material according to the present invention at 60 °C temperature for 6 hours, thereby allowing the air bubble to enter into the inside of the sealing material after removal of the pressure and thus leading to appearance failure. Accordingly, it is preferred that the hardening temperature is less than 80 °C in the presence of pressure and less than 120 °C in the absence of pressure as the hardening conditions for the sealing material used in the film substrate.

As state above, the hardened material formed of the sealing material has a strong influence on the performance of the liquid crystal display device. Since the liquid crystal material may be mixed with materials having active and functional groups, the ionic compound and the low molecular weight compound contained in the sealing material may precipitate in the liquid crystal material, thereby increasing the consumption current value, absorbing an atmospheric moisture and swelling the hardened sealing material. There may be arisen the connection failure in a case where the display panel has the electrical connection at the hardened sealing material between the upper and the lower ITO electrodes. Therefore, it is necessary for the sealing material to have the heat-resistance and the liquid crystal-resistance. In particular, special attention has been paid to the relationship between the above resistances and Tg of the hardened material formed of the sealing material. As a result, it is found that there is a good relationship between Tg of the hardened material and the performance of the display. When Tg of the hardened material is less than 35 °C, it is recognized that the consumption current tends to increase and the connection resistance at the hardened sealing material between the upper and the lower ITO electrodes has a tendency that this connection resistance increases at an environmental storage test. When Tg of the hardened material is more than 35 °C, the increase in the consumption current and the connection resistance at the hardened sealing material can be alleviated so that a goal for reliability as the display device can be attained. In addition, when Tg of the hardened material is more than 75 °C, the hardened material becomes too hard and the seal strength of the hardened sealing material may be lowered, although the seal strength is dependent on the species of a surface coating of the substrate. Therefore, it is preferred that Tg of the hardened material formed of the sealing material is between 35 and 75 °C.

It should be noted that the test required for the above goal of reliability was conducted under the following conditions: a storage test at 80 °C temperature for more than 240 hours; a storage test at 60 °C temperature and 90 % humidity for more than 240 hours; an environmental operation test at 70 °C temperature for more than 240 hours; an environmental operation test at 40 °C temperature and 90 % humidity for more than 240 hours; and a heat-cycle test.

As can be seen from the above technical teachings, it is preferred that as the sealing material for use in the liquid crystal display device, which exhibits the good adhesion and the good liquid crystal-resistance, the sealing material according to the present invention has the following properties:
(1) the viscosity of the mixture comprising the epoxy component and the hardening agent component is in a range of from 70 to 130 Pa · s/1.5rpm/25°C.
(2) the gelation time at 150 °C temperature of the above mixture is between 240 and 360 seconds
(3) Tg of the hardened material formed of the above mixture is in a range of from 35 to 75 °C.

The present invention will be illustrated in more detailed with reference to embodiments below, but is not to be construed as limiting the invention.

### [EMBODIMENT 1]

The estimate of adhesion and the liquid crystal-resistance of the hardened material were carried out for the sealing material according to the present invention in the following aspects. The estimate of adhesion and the liquid crystal-resistance of the sealing material were performed by use of the plastic substrate having a thickness of about 0.1 mm.

### (1) Estimate of the adhesion.

Experiment for estimate of the adhesion was conducted by making samples having a seal part thickness of 6 µm and a seal part width of 2 mm on the plastic substrate. The hardened material was peeled from the plastic substrate at an angle of 90 degree to estimate the adhesion.

### (2) Estimate of the liquid crystal-resistance.

Experiment for assessment of the liquid crystal-resistance of the hardened material formed of the sealing material was conducted as follows. The hardened material was stored in the liquid crystal material at high temperature. After storage, specific resistance of the liquid crystal and swelling degree of the hardened material formed of the sealing material are determined to estimate the liquid crystal-resistance. In this estimate, a lower specific resistance than that before storage indicates the poor liquid crystal-resistance and in this case the liquid crystal material can penetrate into the hardened material so as to swell the hardened material, thereby increasing a weight of the hardened material. A higher specific resistance reveals to be good liquid crystal-resistance, while suppressing the swelling of the hardened material.

More specifically, in order to obtain a good candidate for the sealing material, the following experiment was conducted.

The following epoxy components with various ratios were mixed by means of a homogenizer and three rolls mill so as to form an epoxy main agent. Also, the following hardening agent components were mixed by use of the homogenizer so as to give a hardening agent.

### (EPOXY RESIN COMPONENETS)

a high-purified epoxy resin derived from bisphenol A [as EPOXY 1, Yuka-Shell Epoxy Co. Ltd., Epicoat YL-980]
a bi-functinal epoxy resin derived from alcohol [as EPOXY 2, Sanyo Kasei Co. Ltd., Glyciether BPP350 (Main component is the above formula (4))]

| | parts by weight |
|---|---|
| tris(2-hydroxyethyl)isocyanurate-tris(3-mercaptopropionate) [Yodo Chemical Co. Ltd.] | 100 |
| 2,4,6-tri(dimethylamino)-methylphenol | 1.2 |

Thus prepared epoxy main agent and hardening agent were mixed at a weight ratio of 100 : 94 to prepare a sealing material. The resulting sealing material was hardened at 60 °C temperature for 5 hours and followed by an additional hardening treatment at 120 °C temperature for two hours to form a hardened material. A 0.1 g of this hardened material was entered into about 1.2 ml of a liquid crystal material [Chisso Co. Ltd., RC-4087] so as to store at 85 °C for 4 days. After storage, an intrinsic resistance (hereinafter referred to as resistivity) of the liquid crystal material was measured.

As Comparative Example 1 which is typical of the conventional sealing material, the same procedure was performed except that the following epoxy components was used.

| | parts by weight |
|---|---|
| a high-purified epoxy resin derived from bisphenol A [as EPOXY 1, Yuka-Shell Epoxy Co. Ltd., Epicoat YL-980] | 80 |
| a bi-functinal epoxy resin derived from polyethylene glycol as shown in the above formula (3) as EPOXY 2 | 20 |

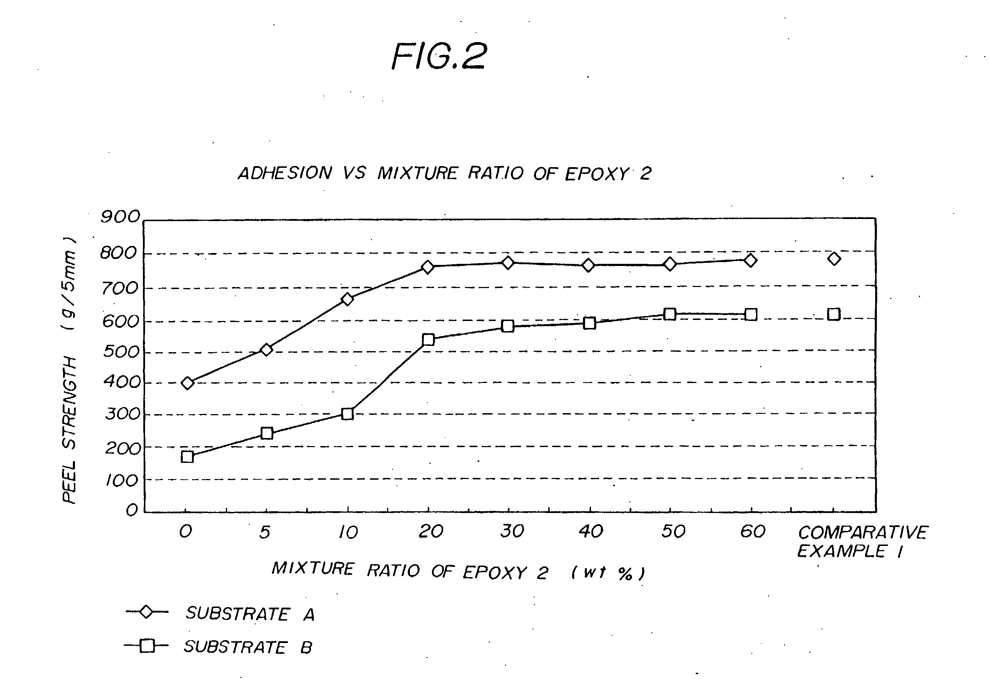

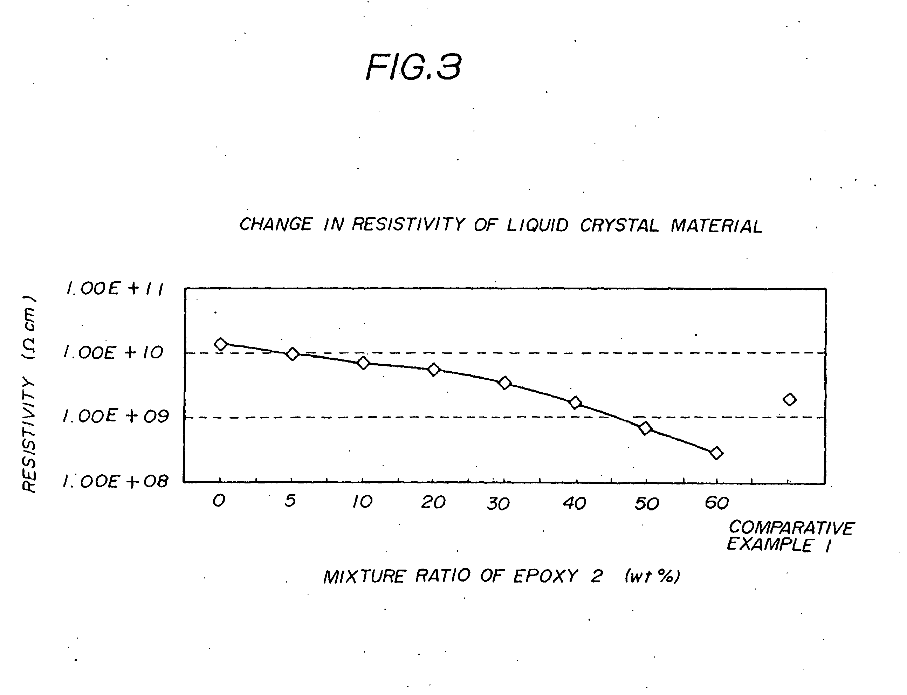

FIGs. 2 and 3 show results of adhesion and liquid crystal-resistance of the hardened material comprising various mixture ratios of EPOXY 1 and EPOXY 2. In FIG. 2, substrate A is a conventional polycarbonate film and substrate B is a transparent conducting film [Teijin Co. Ltd., HA100-B200] in which the inorganic barrier layer (SiO₂) is deposited on an opposite side of the polycarbonate film to a side provided with the ITO electrode and the thin organic coating having a thickness of about 5 µm is formed on the ITO electrode. Because of the organic coating layer of substrate B, as compared to substrate A, the peel strength for substrate B is lower than that of substrate A. Our goal for the peel strength as adhesion against substrate A is to have peel strength of more than 300 g/5mm. As can be seen from FIG. 2, the good peel strength was obtained for a mixture ratio of EPOXY 2 in total epoxy resin being more than 10.

From the result shown in FIG. 3, good results of change in resistivity of the liquid crystal material were obtained for the mixture ratio of EPOXY 2 having less than 40, as compared to the Comparative Example 1.

As can be evident from the above results shown in FIGs. 2 and 3, the mixture ratio of EPOXY 1 to EPOXY 2 is in a range of from 90/10 to 60/40, preferably 80/20 to 70/30.

### [EMBODIMENT 2]

### (A method for manufacturing the liquid crystal display device using the plastic film substrate)

A pattern of an ITO electrode is formed on the plastic film substrate for use in the liquid crystal display device by means of a photolithographic method or the like. The substrate is washed after formation of the pattern of the ITO electrode and an orientation film formed of polyamide or polyimide or the like is printed on the above substrate by means of a flexographic method or the like. After baking the substrate at a predetermined temperature, the substrate is rubbed to complete the orientation treatment for the liquid crystal material. After removal of a chip generated by the rubbing treatment by means of the ultrasonic dry cleaning, a hole for a leader portion of the ITO electrode is formed on a position of one of the substrates or both the substrates, the position corresponding to the electrode terminals (This step is hereinafter abbreviated to precut step). Complete removal of the chip is carried out by means of the ultrasonic cleaning (the ultrasonic water cleaning at frequency of 30 to 60 Hz and water cleaning around frequency of 1MHz).

A gap agent of a spherical particle formed of a plastic material or an inorganic material which define a cell gap is sprayed on one of the substrates, the sealing material according to the present invention is screen-printed on another substrate and is then subjected to prebaking treatment. Two substrates are aligned together to superimpose these two substrates. A plastic particle covered with a metal (Au) is contained in the sealing material, a particle size of the plastic particle being 0.5 to 2.0 µm larger than that of the gap agent particle. In this case, the prebaking treatment is carried out at a higher temperature than commencement temperature of the gelation of a polymeric particle contained in the sealing material for 1 to 3 minutes. The prebaking operation allows the polymeric particle to be gelated, thereby increasing the viscosity of the sealing material. As a result, spread of the sealing material can be inhibited during the prebaking step so that the sealing can be accomplished uniformly with the sealing material according to the present invention. In addition, the air bubble which is contained within the sealing material can be removed during the above prebaking step.

A pair of superimposed two substrates is set to a pressure baking apparatus which is an air-bag type and baking treatment is carried out under a pressure of 2 to 3 Kgf/cm² at a temperature of 60 °C or less. Although a baking time is dependent on the kind of the sealing material, this time is preferably between 3 and 10 hours. As explained above, after the baking, the pressure is released and the substrate is then removed from the apparatus. It is necessary to remove from the apparatus at a lower temperature than Tg of the hardened material formed of the sealing material. If the pressure is released at a higher temperature than Tg, the connection resistance at the hardened sealing material between the upper and the lower ITO electrodes may be increased, thereby resulting in poor product yield.

Next, the pair of the superimposed two substrates which are sealed by the sealing material is cut into individual cells. In general, it is customary to use a large size substrate in order to obtain a number of the liquid crystal cells in one processing. The cell thus divided above is also subjected to an additional baking treatment at a temperature of 120 °C or more, so that a crosslinking reaction of the sealing material can be further improved. In this case, this additional baking treatment of the divided liquid crystal cells is carried out in the absence of pressure by use of a storage jig, such as a container having a number of partitions

The liquid crystal material is injected into the individual liquid crystal cells by means of a vacuum method which utilizes a atmospheric difference. An excess liquid crystal material is injected into the cell. Because it is not enough for uniformity of the gap of the cell, an extra amount of the liquid crystal material is removed by pressing so as to pack the cell. As a packing agent, it is desirable to use an UV curing resin from the viewpoint of productivity, but it is possible to use a thermosetting resin based on the epoxy resin.

A polarizing plate or a polarizing plate with a phase difference plate can be attached onto a front side of the liquid crystal cell. When the liquid crystal material is a twisted nematic type, the polarizing plate is provided on the front side and, when the liquid crystal is the STN type, the polarizing plate with the phase difference plate is provided. Onto a rear side of the liquid crystal a polarizing plate with a reflective plate or semi-transmission plate can be attached so as to produce the liquid crystal panel. Although a surface mounting of the liquid crystal panel is carried out at a drive circuit or a connector of the drive circuit, further detailed explanation for manufacturing the liquid crystal display is omitted in this specification.

The sealing material according to the present invention is shown to be very useful for PF-LCD in which use is made of the liquid crystal material which is very sensitive to a surrounding material and which is low voltage-driven. The technical effect achieved by the present invention is to provide the sealing material having high reliability which has not been achieved by the conventional sealing material.

The following examples are intended to illustrate the manufacturing method of the liquid crystal display device having the plastic film substrate by use of the sealing material according to the present invention, without limiting the invention.

### EXAMPLE 1

The following epoxy components were mixed by means of a homogenizer and three rolls mill so as to form an epoxy main agent. Also, the following hardening agent components were mixed by use of the homogenizer so as to give a hardening agent.

| (EPOXY RESIN COMPONENTS) | |
|---|---|
| | parts by weight |
| a high-purified epoxy resin derived from bisphenol A [Yuka-Shell Epoxy Co. Ltd., Epicoat YL-980] | 85 |
| a bi-functional epoxy resin derived from alcohol [Sanyo Kasei Co. Ltd., Glyciether BPP350 (Main component is the above formula (4))] | 15 |
| titanium oxide [Nihon Aerosol Co. Ltd., P-25] | 25 |
| amorphous silica [Nihon aerosol Co. Ltd., R-805] | 10 |
| a silane coupling agent [Shinetsu Silicone Co., Ltd., KBM403] | 5 |

| (HARDENING AGENT COMPONENTS) | |
|---|---|
| | parts by weight |
| tris(2-hydroxyethyl)isocyanurate-tris(3-mercaptopropionate) [Yodo Chemical Co. Ltd.] | 100 |
| 2,4,6-tri(dimethylamino)-methylphenol | 1.2 |
| titanium oxide [Nihon Aerosol Co. Ltd., P-25] | 20 |
| amorphous silica [Nihon Aerosol Co. Ltd., R-805] | 10 |

Thus prepared epoxy main agent and hardening agent were mixed at a weight ratio of 100 : 94 to prepare a sealing material. A viscosity of the sealing material was determined to be 100 Pa · s/2.5rpm/25 °C. A time required for gelation at 150 °C temperature was 268 seconds. The resulting sealing material was hardened at 60 °C temperature for 5 hours and followed by an additional hardening treatment at 120 °C temperature for two hours to form a hardened material. Tg of the hardened material formed of the above sealing material was 40 °C by means of differential scanning calorimetry. A 0.1 g of this hardened material was entered into about 1.2 ml of a liquid crystal material [Chisso Co. Ltd., RC-4096; a threshold voltage thereof is 1.33 V and dielectric anisotropic value thereof is 14.0.] so as to store at 85 °C for 4 days. After storage, the resistivity of the liquid crystal material was measured and weights of the hardened material before and after the storage were measured to determine a ratio of weight change of the hardened material (hereinafter referred to as swelling ratio). As a result, a value of the resistivity was 2.8 x 10⁸ Ωcm and the swelling ratio was 1.00, that is to say, no swelling occurred.

An ITO electrode provided on a transparent conducting film [Teijin Co. Ltd., HA100-B200] was etched by a conventional photolithography to form a film substrate having the ITO in a desired pattern. The above sealing material was screen-printed on the film substrate. The thus prepared sealing material was heated at 60 °C temperature for 5 hours and followed by an additional hardening treatment at 120 °C temperature for two hours to produce a hardened material. The hardened material was peeled from the film substrate at an angle of 90 degree to measure peel strength. The peel strength was 270 gf/5mm and it was sufficient contact with the film substrate.

A pattern of an ITO electrode provided on a polycarbonate film as a base film having a thickness of 105 µm and a SiO₂ film provided on an opposite side to the ITO electrode [Teijin Co. Ltd., HA100-B200] was formed by the photolithography. After cleaning the film substrate with an alkaline washing agent [Yokohama Yushi Co. Ltd., LGL], a contaminant of an organic compound on a surface of the film substrate was removed by photodecomposition by means of an UV/Ozone processor. An orientation agent [JSR., AL-3046] was printed on the film substrate in a desired pattern by a flexographic method. A solvent of the orientation agent was dried at 85 °C temperature and the orientation layer thus printed on the film substrate was subjected to additional heat treatment at 120 °C. After heating, rubbing treatment was carried out on the orientation layer to form an orientation film. The rubbing treatment was performed in such a way that a twist angle between a liquid crystal molecule located at the upper film substrate and a liquid crystal molecule located at the lower film substrate was established to be 240 degree. It should be noted that a metal mask is provided on a sealing part and a leader part of the ITO electrodes lest these parts should be rubbed. After removal of a chip generated by rubbing treatment by use of the supersonic dry cleaning, the precut step was carried out at the position corresponding to electrode terminals of the upper and the lower substrates. In addition, the supersonic cleaning was carried out in order to remove the chip completely (the ultrasonic water cleaning at frequency of 30 to 60 Hz and water cleaning around frequency of 1MHz).

A gap agent [Natoco Paint Co. Ltd., XC650: A particle size is 6.5 µm] of a plastic spherical particle was spray onto the lower film substrate in order to determine the cell gap. A density of the gap agent was 300±30/mm². The sealing material comprising the above components was screen-printed on the upper film substrate. As a conducting particle of the sealing material between the ITO electrodes of the upper and the lower substrates, a plastic particle which has a particle size of 7.0 µm and which is covered with gold [Sumitomo Fine Chemicals Co. Ltd., Micropearl AU: Au-207] was added in the sealing material in an amount of 2.0 percentage by weight. A density of the conducting particle was 500±50/mm². Prebaking step for the sealing material was carried out at 50 °C temperature for two minutes.

The upper and the lower substrates were aligned to superimpose these substrates. A pair of these superimposed substrates was loaded into a pressure baking apparatus which is an air-bag type. A pressure of 3 Kgf/cm² was applied to these superimposed substrates. Baking treatment was carried out at a temperature of 60 °C for seven hours while applying the above pressure to the substrates. After this baking treatment, these superimposed substrates was cooled at room temperature for one hour, and when a temperature of the substrates was 35 °C, the pressure was released and then the substrates was removed from the apparatus.

Next, the pair of the superimposed two substrates which were sealed by the sealing material was cut into individual liquid crystal cells. The liquid crystal cell thus cut was also subjected to an additional baking treatment at a temperature of 120 °C for two hours, so that a crosslinking reaction of the sealing material can be further enhanced. In this treatment, this additional baking of the liquid crystal cells thus cut was carried out in the absence of the pressure by using the storage jig. After the above baking, the liquid crystal cells were stored under an atmosphere of 0.2 torr for one hour or more.

Then, the liquid crystal material was injected into the liquid crystal cell by the vacuum method. At this time, since it was not enough for the uniformity of the cell gap across the substrates, an excess amount of the liquid crystal material was injected into the liquid crystal cell. A pressure of 40 kgf/cell was applied to the liquid crystal cell injected with the above material to remove an extra amount of the liquid crystal material from an injecting inlet. The injecting inlet was then packed by an UV curing resin (Toho Kasei Co. Ltd., Hilock UV 581). The UV curing resin was provided on the injecting inlet. An UV light was irradiated to harden the UV curing resin and the pressure was then released.

For the purpose of cleaning contaminants around the injecting inlet, the liquid crystal cell after packing was washed with a detergent [Kao Co. Ltd., LC841]. After rinsed with a purified water, the liquid crystal cell was dried in an oven at 85 °C temperature and an orientational character of the liquid crystal property was stabilized at the same time. A polarizing plate with a phase difference plate was attached onto a front side of the film substrate, whereas onto a rear side of the film substrate a polarizing plate with a semi-transmission plate was provided so as to produce the liquid crystal display panel based on the semi-transmission type.

The results of reliability of the liquid crystal display panel thus produced was shown in Table 1.

**Table 1**

| The results of Example 1 | | |
|---|---|---|
| | Change ratio of current (after standing/before standing) | Reliability¹⁾ |
| After standing at 85°C for 500 hours | 1.2 | Good |
| After standing at 85°C for 500 hours | 1.2 | Good |

| | | |
|---|---|---|
| 1) This estimate relates to the connection resistance at the hardened sealing material between the upper and the lower ITO electrodes. | | |

### EXAMPLE 2

The following epoxy components were mixed by means of a homogenizer and three rolls mill so as to form an epoxy main agent. Also, the following hardening agent components were mixed by use of the homogenizer so as to give a hardening agent.

| (EPOXY RESIN COMPONENTS) | |
|---|---|
| | parts by weight |
| a high-purified epoxy resin derived from bisphenol A [Yuka-Shell Epoxy Co. Ltd., Epicoat YL-980] | 80 |
| a bi-functinal epoxy resin derived from alcohol [Sanyo Kasei Co. Ltd., Glyciether BPP350 (Main component is the above formula (4))] | 20 |
| PMMA particle [Nihon Xeon Co. Ltd., F351] | 5 |
| titanium oxide [Nihon Aerosol Co. Ltd., P-25] | 20 |
| amorphous silica [Nihon Aerosol Co. Ltd., R-805] | 3 |
| a silane coupling agent [Shinetsu Silicone Co. Ltd., KBM403] | 5 |

| (HARDENING AGENT COMPONENTS) | |
|---|---|
| | parts by weight |
| tris(2-hydroxyethyl)isocyanurate-tris(3-mercaptopropionate) [Yodo Chemical Co. Ltd.] | 100 |
| 2,4,6-tri(dimethylamino)-methylphenol | 1.1 |
| titanium oxide [Nihon Aerosol Co. Ltd., P-25] | 20 |
| amorphous silica [Nihon Aerosol Co. Ltd., R-805] | 10 |

Thus prepared epoxy main agent and hardening agent were mixed at a weight ratio of 100 : 93 to prepare a sealing material. A viscosity of the sealing material was determined to be 115 Pa · s/2.5rpm/25 °C. A time required for gelation at 150 °C temperature was 290 seconds. The resulting sealing material was hardened at 60 °C temperature for 5 hours and followed by an additional hardening treatment at 120 °C temperature for two hours to form a hardened material. Tg of the hardened material formed of the above sealing material was 38 °C by means of differential scanning calorimetry. A 0.1 g of this hardened material was entered into about 1.2 ml of a liquid crystal material [Chisso Co. Ltd., RC-4087; a threshold voltage thereof is 1.38 V and dielectric anisotropic value thereof is 12.4.] so as to store at 85 °C for 4 days. After storage, the resistivity of the liquid crystal material was measured and weights of the hardened material before and after the storage were measured to determine a swelling ratio. As a result, a value of the resistivity was 1.9 x 10¹⁰ Ω cm and the swelling ratio was 1.00, that is to say, no swelling took place.

An ITO electrode provided on a transparent conducting film [Teijin Co. Ltd., HA100-B200] was etched by a conventional photolithography to form a film substrate having the ITO in a desired pattern. The above sealing material was screen-printed on the film substrate. The thus prepared sealing material was heated at 60 °C temperature for 5 hours and followed by an additional hardening treatment at 120 °C temperature for two hours to produce a hardened material. The hardened material was peeled from the film substrate at an angle of 90 degree to measure the peel strength. The peel strength was 320 gf/5mm and it was sufficient contact with the film substrate.

A pattern of an ITO electrode provided on a polycarbonate film as a base film having a thickness of 105 µm and a SiO₂ film provided on an opposite side to the ITO electrode [Teijin Co. Ltd., HA100-B200] was formed by the photolithography. After cleaning the film substrate with the alkaline washing agent [Yokohama Yushi Co. Ltd., LGL], a contaminant of an organic compound on a surface of the film substrate was removed by photodecomposition by means of the UV/Ozone processor. The orientation agent [JSR., AL-3046] was printed on the film substrate in a desired pattern by a flexographic method. A solvent of the orientation agent was dried at 85 °C and the orientation layer thus printed on the film substrate was subjected to additional heat treatment at 120 °C. After heating, rubbing treatment was carried out on the orientation layer to form an orientation film. The rubbing treatment was performed in such a way that a twist angle between a liquid crystal molecule located at the upper film substrate and a liquid crystal molecule located at the lower film substrate was established to be 240 degree. It should be noted that a metal mask is provided on a sealing part and a leader part of the ITO electrodes lest these parts should be rubbed. After removal of a chip generated by rubbing treatment by use of the supersonic dry cleaning, the precut step was carried out at the position corresponding to electrode terminals of the upper and the lower substrates. In addition, the supersonic cleaning was carried out in order to remove the chip completely (the ultrasonic water cleaning at frequency of 30 to 60 Hz and water cleaning around frequency of 1MHz).

A gap agent [Natoco Paint Co. Ltd., XC650: A particle size is 6.5 µm] of a plastic spherical particle was spray onto the lower film substrate in order to determine the cell gap. A density of the gap agent was 300±30/mm². The sealing material comprising the above components was screen-printed on the upper film substrate. As a conducting particle of the sealing material between the ITO electrodes of the upper and the lower substrates, a plastic particle which has a particle size of 7.25 µm and which is covered with gold [Sumitomo Fine Chemicals Co. Ltd., Micropearl AU: Au-20725] was added in the sealing material in an amount of 2.0 percentage by weight. A density of the conducting particle was 470±30/mm². Prebaking step for the sealing material was carried out at 80 °C temperature for two minutes. (The added PMMA particle undergoes a gelation reaction around 70 °C temperature.)

The upper and the lower substrates were aligned to superimpose these substrates. A pair of these superimposed substrates was loaded into a pressure baking apparatus which is an air-bag type. A pressure of 3 Kgf/cm² was applied to these superimposed substrates. Baking treatment was carried out at a temperature of 60 °C for seven hours while applying the above pressure to the substrates. After this baking treatment, these superimposed substrates was cooled at room temperature for one hour, and when a temperature of the substrates was 35 °C, the pressure was released and the substrates was removed from the apparatus.

Next, the pair of the superimposed two substrates which were sealed by the sealing material was cut into individual liquid crystal cells. The liquid crystal cell thus cut was also subjected to an additional baking treatment at a temperature of 120 °C for two hours, so that a crosslinking reaction of the sealing material can be further improved. In this treatment, this additional baking of the liquid crystal cells thus cut was carried out in the absence of the pressure by using the storage jig. After the above baking, the liquid crystal cells were stored under an atmosphere of 0.2 torr for one hour or more.

Then, the liquid crystal material was injected into the liquid crystal cell by the vacuum method. In this time, since it was not enough for the uniformity of the cell gap across the substrates, an excess amount of the liquid crystal material was injected into the liquid crystal cell. A pressure of 40 kgf/cell was applied to the liquid crystal cell injected with the above material to remove an extra amount of the liquid crystal material from an injecting inlet. The injecting inlet was then packed by an UV curing resin (Toho Kasei Co. Ltd., Hilock UV581). The UV curing resin was provided on the injecting inlet. An UV light was irradiated to harden the UV curing resin and the pressure was then released.

In order to clean contaminants around the injecting inlet, the liquid crystal cell after packing was washed with a detergent [Kao Co. Ltd., LC841]. After rinsed with a purified water, the liquid crystal cell was dried in an oven at 85 °C temperature and an orientational character of the liquid crystal property was stabilized at the same time. A polarizing plate with a phase difference plate was attached onto a front side of the film substrate, whereas onto a rear side of the film substrate a polarizing plate with a semi-transmission plate was provided so as to produce the liquid crystal panel based on the semi-transmission type.

The results of reliability of the liquid crystal display panel thus produced was tabulated in Table 2.

**Table 2**

| The results of Example 2 | | |
|---|---|---|
| | Change ratio of current (after standing/before standing) | Reliability¹⁾ |
| After standing at 85°C for 500 hours | 1.4 | Good |
| After standing at 40 °C and 90 % humidity for 500 hours | 1.1 | Good |

| | | |
|---|---|---|
| 1) This estimate relates to the connection resistance at the hardened sealing material between the upper and the lower ITO electrodes. | | |

### EXAMPLE 3

The following epoxy components were mixed by means of a homogenizer and three rolls mill so as to form an epoxy main agent. Also, the following hardening agent components were mixed by use of the homogenizer so as to give a hardening agent.

| (EPOXY RESIN COMPONENTS) | |
|---|---|
| | parts by weight |
| a high-purified epoxy resin derived from bisphenol A [Yuka-Shell Epoxy Co. Ltd., Epicoat YL-980] | 75 |
| a bi-functinal epoxy resin derived from alcohol [Sanyo Kasei Co. Ltd., Glyciether BPP350 (Main component is the above formula (4))] | 25 |
| titanium oxide [Nihon Aerosol Co. Ltd., P-25] | 20 |
| amorphous silica [Nihon Aerosol Co. Ltd., R-805] | 10 |
| a silane coupling agent [Shinetsu Silicone Co. Ltd., KBM403] | 5 |

| (HARDENING AGENT COMPONENTS) | |
|---|---|
| | parts by weight |
| tris(2-hydroxyethyl)isocyanurate-tris(3-mercaptopropionate) [Yodo Chemical Co. Ltd.] | 100 |
| 2,4,6-tri(dimethylamino)-methylphenol | 1.2 |
| titanium oxide [Nihon Aerosol Co. Ltd., P-25] | 20 |
| amorphous silica [Nihon Aerosol Co. Ltd., R-805] | 10 |

Thus prepared epoxy main agent and hardening agent were mixed at a weight ratio of 100 : 86 to prepare a sealing material. A viscosity of the sealing material was determined to be 98 Pa · s/2.5rpm/25 °C. A time required for gelation at 150 °C temperature was 310 seconds. The resulting sealing material was hardened at 60 °C temperature for 5 hours and followed by an additional hardening treatment at 120 °C temperature for two hours to form a hardened material. Tg of the hardened material formed of the above sealing material was 37 °C by means of differential scanning calorimetry. A 0.1 g of this hardened material was entered into about 1.2 ml of a liquid crystal material [Chisso Co. Ltd., RC-4087; a threshold voltage thereof is 1.38 V and dielectric anisotropic value thereof is 12.4.] so as to store at 85 °C for 4 days. After storage, the resistivity of the liquid crystal material was measured and weights of the hardened material before and after the storage were measured to determine a swelling ratio. As a result, a value of the resistivity was 1.8 x 10¹⁰ Ω cm and the swelling ratio was 1.05, that is to say, little swelling occurred.

An ITO electrode provided on a transparent conducting film [Teijin Co. Ltd., HA100-B200] was etched by a conventional photolithography to form a film substrate having the ITO in a desired pattern. The above sealing material was screen-printed on the film substrate. The thus prepared sealing material was heated at 60 °C temperature for 5 hours and followed by an additional hardening treatment at 120 °C temperature for two hours to produce a hardened material. The hardened material was peeled from the film substrate at an angle of 90 degree to measure the peel strength. The peel strength was 355 gf/5mm and it was sufficient contact with the film substrate.

A pattern of an ITO electrode provided on a polycarbonate film as a base film having a thickness of 105 µm and a SiO₂ film provided on an opposite side to the ITO electrode [Teijin Co. Ltd., HA100-B200] was formed by the photolithography. After cleaning the film substrate with the alkaline washing agent [Yokohama Yushi Co. Ltd., LGL], a contaminant of an organic compound on a surface of the film substrate was removed by photodecomposition by means of the UV/Ozone processor. The orientation agent [JSR., AL-3046] was printed on the film substrate in a desired pattern by a flexographic method. A solvent of the orientation agent was dried at 85 °C and the orientation layer thus printed on the film substrate was subjected to additional heat treatment at 120 °C. After heating, rubbing treatment was carried out on the orientation layer to form an orientation film. The rubbing treatment was performed in such a way that a twist angle between a liquid crystal molecule located at the upper film substrate and a liquid crystal molecule located at the lower film substrate was established to be 240 degree. It should be noted that a metal mask is provided on a sealing part and a leader part of the ITO electrodes lest these parts should be rubbed. After removal of a chip generated by rubbing treatment by use of the supersonic dry cleaning, the precut step was carried out at the position corresponding to electrode terminals of the upper and the lower substrates. In addition, the supersonic cleaning was carried out in order to remove the chip completely (the ultrasonic water cleaning at frequency of 30 to 60 Hz and water cleaning around frequency of 1MHz).

A gap agent [Natoco Paint Co. Ltd., XC650: A particle size is 6.5 µm] of a plastic spherical particle was spray onto the lower film substrate in order to determine the cell gap. A density of the gap agent was 300±30/mm². The sealing material comprising the above components was screen-printed on the upper film substrate. As a conducting particle of the sealing material between the ITO electrodes of the upper and the lower substrates, a plastic particle which has a particle size of 7.25 µm and which is covered with gold [Sumitomo Fine Chemicals Co. Ltd., Micropearl AU: Au-20725] was added in the sealing material in an amount of 2.0 percentage by weight. A density of the conducting particle was 470±30/mm². Prebaking step for the sealing material was carried out at 50 °C temperature for two minutes.

The upper and the lower substrates were aligned to superimpose these substrates. A pair of these superimposed substrates was loaded into a pressure baking apparatus which is an air-bag type. A pressure of 3 Kgf/cm² was applied to these superimposed substrates. Baking treatment was carried out at a temperature of 60 °C for seven hours while applying the above pressure to the substrates. After this baking treatment, these superimposed substrates was cooled at room temperature for one hour, and when a temperature of the substrates was 35 °C, the pressure was released and the substrates was removed from the apparatus.

Next, the pair of the superimposed two substrates which were sealed by the sealing material was cut into individual liquid crystal cells. The liquid crystal cell thus cut was also subjected to an additional baking treatment at a temperature of 120 °C for two hours, so that a crosslinking reaction of the sealing material can be further improved. In this treatment, this additional baking of the liquid crystal cells thus cut was carried out in the absence of the pressure by using the storage jig. After the above baking, the liquid crystal cells were stored under an atmosphere of 0.2 torr for one hour or more.

Then, the liquid crystal material was injected into the liquid crystal cell by the vacuum method. In this time, since it was not enough for the uniformity of the cell gap across the substrates, an excess amount of the liquid crystal material was injected into the liquid crystal cell. A pressure of 40 kgf/cell was applied to the liquid crystal cell injected with the above material to remove an extra amount of the liquid crystal material from an injecting inlet. The injecting inlet was then packed by an UV curing resin (Toho Kasei Co. Ltd., Hilock UV581). The UV curing resin was provided on the injecting inlet. An UV light was irradiated to harden the UV curing resin and the pressure was then released.

In order to clean contaminants around the injecting inlet, the liquid crystal cell after packing was washed with a detergent [Kao Co. Ltd., LC841]. After rinsed with a purified water, the liquid crystal cell was dried in an oven at 85 °C temperature and an orientational character of the liquid crystal property was stabilized at the same time. A polarizing plate with a phase difference plate was attached onto a front side of the film substrate, whereas onto a rear side of the film substrate a polarizing plate with a semi-transmission plate was provided so as to produce the liquid crystal panel based on the semi-transmission type.

The results of reliability of the liquid crystal display panel thus produced was illustrated in Table 3.

**Table 3**

| The results of Example 3 | | |
|---|---|---|
| | Change ratio of current (after standing/before standing) | Reliability¹⁾ |
| After standing at 85°C for 500 hours | 1.7 | Good |
| After standing at 40°C and 90 % humidity for 500 hours | 1.3 | Good |

| | | |
|---|---|---|
| 1) This estimate relates to the connection resistance at the hardened sealing material between the upper and the lower ITO electrodes. | | |

### COMPARATIVE EXAMPLE 2

The following epoxy components were mixed by means of a homogenizer and three rolls mill so as to form an epoxy main agent. Also, the following hardening agent components were mixed by use of the homogenizer so as to give a hardening agent.

| (EPOXY RESIN COMPONENTS) | |
|---|---|
| | parts by weight |
| a high-purified epoxy resin derived from bisphenol A [Yuka-Shell Epoxy Co., Ltd., Epicoat YL-980] | 80 |
| a bi-functional epoxy resin derived from alcohol [Sanyo Kasei Co., Ltd., Glyciether BPP350 (Main component is the above formula (3) and does not contain the bisphenol skeleton witihin its molecule)] | 20 |
| titanium oxide [Nihon Aerosol Co., Ltd., P-25] | 20 |
| amorphous silica [Nihon Aerosol Co., Ltd., R-805] | 10 |
| a silane coupling agent [Shinetsu Silicone Co., Ltd., KBM43] | 5 |

| (HARDENING AGENT COMPONENTS) | |
|---|---|
| | parts by weight |
| tris(2-hydroxyethyl)isocyanurate-tris(3-mercaptopropionate) [Yodo Chemical Co. Ltd.] | 100 |
| 2,4,6-tri(dimethylamino)-methylphenol | 1.2 |
| titanium oxide [Nihon Aerosol Co. Ltd., P-25] | 20 |
| amorphous silica [Nihon Aerosol Co. Ltd., R-805] | 10 |

Thus prepared epoxy main agent and hardening agent were mixed at a weight ratio of 100 : 93 to prepare a sealing material. A viscosity of the sealing material was determined to be 90 Pa · s/2.5rpm/25 °C. A time required for gelation at 150°C temperature was 296 seconds. The resulting sealing material was hardened at 60 °C temperature for 5 hours and followed by an additional hardening treatment at 120 °C temperature for two hours to form a hardened material. Tg of the hardened material formed of the above sealing material was 29 °C by means of differential scanning calorimetry. A 0.1 g of this hardened material was entered into about 1.2 ml of a liquid crystal material [Chisso Co. Ltd., RC-4087; a threshold voltage thereof is 1.38 V and dielectric anisotropic value thereof is 12.4.] so as to store at 85 °C for 4 days. After storage, the resistivity of the liquid crystal material was measured and weights of the hardened material before and after the storage were measured to determine a swelling ratio. As a result, a value of the resistivity was 2.3 x 10⁹ Ω cm and the swelling ratio was 1.15.

An ITO electrode provided on a transparent conducting film [Teijin Co. Ltd., HA100-B200] was etched by a conventional photolithography to form a film substrate having the ITO in a desired pattern. The above sealing material was screen-printed on the film substrate. The thus prepared sealing material was heated at 60 °C temperature for 5 hours and followed by an additional hardening treatment at 120 °C temperature for two hours to produce a hardened material. The hardened material was peeled from the film substrate at an angle of 90 degree to measure the peel strength. The peel strength was 450 gf/5mm and it was sufficient contact with the film substrate.

A pattern of an ITO electrode provided on a polycarbonate film as a base film having a thickness of 105 µm and a SiO₂ film provided on an opposite side to the ITO electrode [Teijin Co. Ltd., HA100-B200] was formed by the photolithography. After cleaning the film substrate with the alkaline washing agent [Yokohama Yushi Co. Ltd., LGL], a contaminant of an organic compound on a surface of the film substrate was removed by photodecomposition by means of the UV/Ozone processor. The orientation agent [JSR., AL-3046] was printed on the film substrate in a desired pattern by a flexographic method. A solvent of the orientation agent was dried at 85 °C and the orientation layer thus printed on the film substrate was subjected to additional heat treatment at 120 °C. After heating, rubbing treatment was carried out on the orientation layer to form an orientation film. The rubbing treatment was performed in such a way that a twist angle between a liquid crystal molecule located at the upper film substrate and a liquid crystal molecule located at the lower film substrate was established to be 240 degree. It should be noted that a metal mask is provided on a sealing part and a leader part of the ITO electrodes lest these parts should be rubbed. After removal of a chip generated by rubbing treatment by use of the supersonic dry cleaning, the precut step was carried out at the position corresponding to electrode terminals of the upper and the lower substrates. In addition, the supersonic cleaning was carried out in order to remove the chip completely (the ultrasonic water cleaning at frequency of 30 to 60 Hz and water cleaning around frequency of 1MHz).

A gap agent [Natoco Paint Co. Ltd., XC650: A particle size is 6.5 µm] of a plastic spherical particle was spray onto the lower film substrate in order to determine the cell gap. A density of the gap agent was 300±30/mm². The sealing material comprising the above components was screen-printed on the upper film substrate. As a conducting particle of the sealing material between the ITO electrodes of the upper and the lower substrates, a plastic particle which has a particle size of 7.25 µm and which is covered with gold [Sumitomo Fine Chemicals Co. Ltd., Micropearl AU: Au-20725] was added in the sealing material in an amount of 2.0 percentage by weight. A density of the conducting particle was 470±30/mm². Prebaking step for the sealing material was carried out at 50 °C temperature for two minutes.

The upper and the lower substrates were aligned to superimpose these substrates. A pair of these superimposed substrates was loaded into a pressure baking apparatus which is an air-bag type. A pressure of 3 Kgf/cm² was applied to these superimposed substrates. Baking treatment was carried out at a temperature of 60 °C for seven hours while applying the above pressure to the substrates. After this baking treatment, these superimposed substrates was cooled at room temperature for one hour, and when a temperature of the substrates was 35 °C, the pressure was released and then the substrates was removed from the apparatus.

Next, the pair of the superimposed two substrates which were sealed by the sealing material was cut into individual liquid crystal cells. The liquid crystal cell thus cut was also subjected to an additional baking treatment at a temperature of 120 °C for two hours, so that a crosslinking reaction of the sealing material can be further improved. In this treatment, this additional baking of the liquid crystal cells thus cut was carried out in the absence of the pressure by using the storage jig. After the above baking, the liquid crystal cells were stored under an atmosphere of 0.2 torr for one hour or more.

Then, the liquid crystal material was injected into the liquid crystal cell by the vacuum method. In this time, since it was not enough for the uniformity of the cell gap across the substrates, an excess amount of the liquid crystal material was injected into the liquid crystal cell. A pressure of 40 kgf/cell was applied to the liquid crystal cell injected with the above material to remove an extra amount of the liquid crystal material from an injecting inlet. The injecting inlet was then packed by an UV curing resin (Toho Kasei Co. Ltd., Hilock UV581). The UV curing resin was provided on the injecting inlet. An UV light was irradiated to harden the UV curing resin and the pressure was then released.

In order to clean contaminants around the injecting inlet, the liquid crystal cell after packing was washed with a detergent [Kao Co. Ltd., LC841]. After rinsed with a purified water, the liquid crystal cell was dried in an oven at 85 °C temperature and an orientational character of the liquid crystal property was stabilized at the same time. A polarizing plate with a phase difference plate was attached onto a front side of the film substrate, whereas onto a rear side of the film substrate a polarizing plate with a semi-transmission plate was provided so as to produce the liquid crystal panel based on the semi-transmission type.

The results of reliability of the liquid crystal display panel thus produced was tabulated in Table 4.

**Table 4**

| The results of Comparative Example 4 | | |
|---|---|---|
| | Change ratio of current (after standing/before standing) | Reliability¹⁾ |
| After standing at 85°C for 500 hours | 2.5 | Display failure |
| After standing at 40°C and 90 % humidity for 500 hours | 2.0 | Display failure |

| | | |
|---|---|---|
| 1) This estimate relates to the connection resistance at the hardened sealing material between the upper and the lower ITO electrodes. | | |

As can be seen from the results shown in Tables 1 to 4, when the sealing material according to the present invention is employed, good adhesion against the plastic film substrate as well as good liquid crystal-resistance can be achieved in the liquid crystal display device using the plastic film substrate. Furthermore, the sealing material according to the present invention provides a liquid crystal display device which has high reliability.

The present invention is not limited to the specifically disclosed embodiments, and variations and modifications may be made without departing from the scope of the present invention.

## Claims

1. A sealing material for use in a liquid crystal display device using a plastic substrate, said sealing material comprising an epoxy component and a hardening agent component:
said epoxy component comprising:
a first epoxy resin derived from a bisphenol derivative and a filler material having an average particle size of 2 µm or less, said filler material comprising more than at least one species; and
said hardening agent component comprising:
a multi-functional thiol-type compound having an isocyanurate skeleton;
a tertiary amine compound as a reactive catalytic material; and
a tertiary amine compound as a reactive catalytic material; and
a silane coupling agent,
**characterized in that** the epoxy component further comprises a second epoxy resin derived from an alcohol compound, said second epoxy resin having a bisphenol skeleton within its molecule wherein a mixture weight ratio of said first epoxy resin to said second epoxy resin is in a range from 90/10 to 60/40.

2. The sealing material as claimed in claim 1, wherein a viscosity of said sealing material is in a range from 70 to 130 Pa · s/2.5rpm at a temperature of 25 °C.

3. The sealing material as claimed in claim 1, wherein a time required for gelation of said sealing material at 150 °C temperature is between 240 and 360 seconds.

4. The sealing material as claimed in claim 1 wherein a glass transition temperature of a hardened material comprising said sealing material is in a range from 35 to 75 °C.

5. The sealing material as claimed in claim 1, further comprising a polymeric particle which undergoes a gelation reaction below 100°C temperature.

6. The sealing material as claimed in claim 5, wherein said polymeric particle is a core-shell type poly (methyl methacrylate) particle which has a rubber material in an inner portion of said polymeric particle.

7. A liquid crystal display device in which a liquid crystal material is packed between a pair of substrates, at least one of said substrates being a plastic substrate, a periphery of said liquid crystal material sealed by a sealing material, said sealing material comprising an epoxy component and a hardening agent component:
said epoxy component comprising:
a first epoxy resin derived from a bisphenol derivative; and
a filler material having an average particle size of 2 µm or less, said filler material comprising more than at least one species; and
said hardening agent component comprising:
a multi-functional thiol-type compound having an isocyanurate skeleton;
a tertiary amine compound as a reactive catalytic material; and
a silane coupling agent;
**characterized in that** the epoxy component comprises a second epoxy resin derived from an alcohol compound, said second epoxy resin having a bisphenol skeleton within its molecule wherein a mixture weight ratio of said first epoxy resin to said second epoxy resin is in the range from 90/10 to 60/40.

8. The liquid crystal display device as claimed in claim 7, wherein a viscosity of said sealing material is in a range from 70 to 130 Pa · s/2.5rpm at a temperature of 25°C

9. The liquid crystal display device as claimed in claim 7, wherein a time required for gelation of said sealing material at 150 °C temperature is between 240 and 360 seconds.

10. The liquid crystal display device as claimed in claim 7, wherein a glass transition temperature of a hardened material comprising said sealing material is in a range from 35 to 75°C.

11. The liquid crystal display device as claimed in claim 7, wherein said sealing material further comprises a polymeric particle which undergoes a gelation reaction below 100°C temperature.

12. The sealing material as claimed in claim 11, wherein said polymeric particle is a core-shell type poly (methyl metacrylate) particle which has a rubber material in an inner portion of said polymeric particle.

13. The liquid crystal display device as claimed in claim 7, wherein said liquid crystal material has a dielectric anisotropic value of 10 or more and a threshold voltage of 1.5 volt or less.

14. A method for manufacturing a liquid crystal display device having at least two substrates comprising a first substrate and a second substrate, at least one substrate being a plastic substrate, said method comprising the steps of:
forming a ITO electrode provided on said first and said second substrates in a desired pattern;
forming an orientation film on said ITO electrode;
rubbing said orientation film;
spraying a spherical particle as a spacer onto said first substrate
screen-printing a sealing material on said second substrate;
prebaking said sealing material;
superimposing said first substrate with said second substrate to form superimposed substrates with said sealing material therebetween;
pressing said superimposed substrates with a given pressure; and
baking said sealing material between said superimposed substrates while pressing said superimposed substrates,
wherein said sealing material is a sealing material according to any of claims 1 to 6 and comprises a polymeric particle which undergoes a gelation reaction and a temperature of said prebaking step is higher than that of gelation commencement of said polymeric particle.

15. A method for manufacturing a liquid crystal display device having at least two substrates comprising a first substrate and a second substrate, at least one substrate being a plastic substrate, said method comprising the steps of:
forming a ITO electrode provided on said first and said second substrates in a desired pattern;
forming an orientation film on said ITO electrode;
rubbing said orientation film;
spraying a spherical particle as a spacer onto said first substrate
screen-printing a sealing material on said second substrate;
prebaking said sealing material;
superimposing said first substrate with said second substrate to form superimposed substrates with said sealing material therebetween;
pressing said superimposed substrates with a given pressure;
baking said sealing material between said superimposed substrates while pressing said superimposed substrates; and
releasing said given pressure from said superimposed substrates to form said liquid crystal display device,
wherein the sealing material is a sealing material according to any of claims 1 to 6, and
wherein a temperature of said releasing step is lower than a glass transition temperature of a hardened material comprising said sealing material.

## Patentansprüche

1. Dichtungsmaterial zur Verwendung in einer Flüssigkristall-Anzeigevorrichtung, die ein Kunststoffsubstrat verwendet, wobei das Dichtungsmaterial eine Epoxy-Komponente und eine Härtungsmittel-Komponente umfasst:
wobei die Epoxy-Komponente umfasst:
ein erstes Epoxyharz, abgeleitet von einem Bisphenol-Derivat und
ein Füllstoffmaterial mit einer durchschnittlichen Teilchengröße von 2 µm oder weniger, wobei das Füllstoffmaterial mehr als mindestens eine Spezies umfasst; und
die Härtungsmittel-Komponente umfasst:
eine multifunktionelle Verbindung vom Thioltyp mit einem lsocyanuratgerüst;
eine tertiäre Aminverbindung als reaktives, katalytisches Material; und
ein Silan-Kupplungsmittel,
**dadurch gekennzeichnet, dass** die Epoxy-Komponente ferner ein zweites Epoxyharz, abgeleitet von einer Alkoholverbindung, umfasst, wobei das zweite Epoxyharz ein Bisphenolgerüst in seinem Molekül aufweist, wobei das Mischungs-Gewichtsverhältnis des ersten Epoxyharzes zu dem zweiten Epoxyharz in einem Bereich von 90/10 bis 60/40 liegt.

2. Dichtungsmaterial nach Anspruch 1, wobei die Viskosität des Dichtungsmaterials bei einer Temperatur von 25°C in einem Bereich von 70 bis 130 Pa·s/2,5 Upm liegt.

3. Dichtungsmaterial nach Anspruch 1, wobei die zur Gelbildung des Dichtungsmaterials benötigte Zeit bei einer Temperatur von 150°C zwischen 240 und 360 Sekunden beträgt.

4. Dichtungsmaterial nach Anspruch 1, wobei die Glasübergangstemperatur eines das Dichtungsmaterial umfassenden, gehärteten Materials in einem Bereich von 35 bis 75°C liegt.

5. Dichtungsmaterial nach Anspruch 1, ferner umfassend ein Polymerteilchen, das bei einer Temperatur von unter 100°C eine Gelbildungsreaktion eingeht.

6. Dichtungsmaterial nach Anspruch 5, wobei das Polymerteilchen ein Polymethylmethacrylat-Teilchen vom Kern-Schale-Typ ist, welches ein Kautschukmaterial in einem inneren Teil des Polymerteilchens aufweist.

7. Flüssigkristall-Anzeigevorrichtung, bei der ein Flüssigkristall-Material zwischen einem Paar von Substraten gepackt ist, wobei mindestens eines der Substrate ein Kunststoffsubstrat ist, der Außenumfang des Flüssigkristall-Materials von einem Dichtungsmaterial abgedichtet ist, wobei das Dichtungsmaterial eine Epoxy-Komponente und eine Härtungsmittel-Komponente umfasst:
wobei die Epoxy-Komponente umfasst:
ein erstes Epoxyharz, abgeleitet von einem Bisphenol-Derivat, und
ein Füllstoffmaterial mit einer durchschnittlichen Teilchengröße von 2 µm oder weniger, wobei das Füllstoffmaterial mehr als mindestens eine Spezies umfasst; und
die Härtungsmittel-Komponente umfasst:
eine multifunktionelle Verbindung vom Thioltyp mit einem Isocyanuratgerüst;
eine tertiäre Aminverbindung als reaktives, katalytisches Material; und
ein Silan-Kupplungsmittel,
**dadurch gekennzeichnet, dass** die Epoxy-Komponente ferner ein zweites Epoxyharz, abgeleitet von einer Alkoholverbindung, umfasst, wobei das zweite Epoxyharz ein Bisphenolgerüst in seinem Molekül aufweist, wobei das Mischungs-Gewichtsverhältnis des ersten Epoxyharzes zu dem zweiten Epoxyharz in einem Bereich von 90/10 bis 60/40 liegt.

8. Flüssigkristall-Anzeigevorrichtung nach Anspruch 7, wobei die Viskosität des Dichtungsmaterials bei einer Temperatur von 25°C in einem Bereich von 70 bis 130 Pa·s/2,5 Upm liegt.

9. Flüssigkristall-Anzeigevorrichtung nach Anspruch 7, wobei die zur Gelbildung des Dichtungsmaterials benötigte Zeit bei einer Temperatur von 150°C zwischen 240 und 360 Sekunden beträgt.

10. Flüssigkristall-Anzeigevorrichtung nach Anspruch 7, wobei die Glasübergangstemperatur eines das Dichtungsmaterial umfassenden, gehärteten Materials in einem Bereich von 35 bis 75°C liegt.

11. Flüssigkristall-Anzeigevorrichtung nach Anspruch 7, wobei das Dichtungsmaterial ferner ein Polymerteilchen, das bei einer Temperatur von unter 100°C eine Gelbildungsreaktion eingeht, umfasst.

12. Dichtungsmaterial nach Anspruch 11, wobei das Polymerteilchen ein Polymethylmethacrylat-Teilchen vom Kern-Schale-Typ ist, welches ein Kautschukmaterial in einem inneren Teil des Polymerteilchens aufweist.

13. Flüssigkristall-Anzeigevorrichtung nach Anspruch 7, wobei das Flüssigkristall-Material einen Wert der dielektrischen Anisotropie von 10 oder mehr und eine Schwellenspannung von 1,5 Volt oder weniger aufweist.

14. Verfahren zur Herstellung einer Flüssigkristall-Anzeigevorrichtung mit mindestens zwei Substraten umfassend ein erstes Substrat und ein zweites Substrat, wobei mindestens ein Substrat ein Kunststoffsubstrat ist, wobei das Verfahren die folgenden Schritte umfasst:
Bildung einer ITO-Elektrode auf den ersten und zweiten Substraten in einem gewünschten Muster;
Bildung eines Orientierungsfilms auf der ITO-Elektrode;
Reiben des Orientierungsfilms;
Sprühen eines kugelförmigen Teilchens als Abstandhalter auf das erste Substrat;
Siebdrucken eines Dichtungsmaterials auf das zweite Substrat;
Vorbacken des Dichtungsmaterials;
Übereinanderanordnen des ersten Substrats und des zweiten Substrats, um übereinander angeordnete Substrate mit dem Dichtungsmaterial dazwischen zu bilden;
Pressen der übereinander angeordneten Substrate mit einem bestimmten Druck; und
Backen des Dichtungsmaterials zwischen den übereinander angeordneten Substraten während des Pressens der übereinander angeordneten Substrate,
wobei das Dichtungsmaterial ein Dichtungsmaterial nach irgendeinem der Ansprüche 1 bis 6 ist und ein polymeres Teilchen umfasst, das eine Gelbildungsreaktion eingeht, und die Temperatur des Vorbackschrittes höher ist als der Beginn der Gelbildung des polymeren Teilchens.

15. Verfahren zur Herstellung einer Flüssigkristall-Anzeigevorrichtung mit mindestens zwei Substraten umfassend ein erstes Substrat und ein zweites Substrat,
wobei mindestens ein Substrat ein Kunststoffsubstrat ist, wobei das Verfahren die folgenden Schritte umfasst:
Bildung einer ITO-Elektrode auf den ersten und zweiten Substraten in einem gewünschten Muster;
Bildung eines Orientierungsfilms auf der ITO-Elektrode;
Reiben des Orientierungsfilms;
Sprühen eines kugelförmigen Teilchens als Abstandhalter auf das erste Substrat;
Siebdrucken eines Dichtungsmaterials auf das zweite Substrat;
Vorbacken des Dichtungsmaterials;
Übereinanderanordnen des ersten Substrats und des zweiten Substrats, um übereinander angeordnete Substrate mit dem Dichtungsmaterial dazwischen zu bilden;
Pressen der übereinander angeordneten Substrate mit einem bestimmten Druck; und
Backen des Dichtungsmaterials zwischen den übereinander angeordneten Substraten während des Pressens der übereinander angeordneten Substrate, und
Druckentlastung der übereinander angeordneten Substrate, um eine Flüssigkristall-Anzeigevorrichtung zu bilden,
wobei das Dichtungsmaterial ein Dichtungsmaterial nach irgendeinem der Ansprüche 1 bis 6 ist und wobei die Temperatur des Druckentlastungsschrittes niedriger ist als die Glasübergangstemperatur eines das Dichtungsmaterial umfassenden, gehärteten Materials.

## Revendications

1. Matière d'étanchéité destinée à l'utilisation dans un dispositif d'affichage à cristal liquide utilisant un substrat en plastique, ladite matière d'étanchéité comprenant un composant époxy et un composant agent de durcissement :
ledit composant époxy comprenant :
une première résine époxy dérivée d'un dérivé de bisphénol et
une charge ayant une taille de particules de 2 µm ou moins, ladite charge comprenant plus d'au moins une espèce ; et
ledit composant agent de durcissement comprenant :
un composé de type thiol à plusieurs fonctions ayant un squelette d'isocyanurate ;
un composé amine tertiaire à titre de matière catalytique réactive ; et
un composé amine tertiaire à titre de matière catalytique réactive ; et
un agent de couplage au silane,
**caractérisée en ce que** le composant époxy comprend, en outre, une seconde résine époxy dérivée d'un composé alcool, ladite seconde résine époxy ayant un squelette de bisphénol dans sa molécule, dans laquelle un rapport en poids de mélange de ladite première résine époxy sur ladite seconde résine époxy est dans une plage allant de 90/10 à 60/40.

2. Matière d'étanchéité selon la revendication 1, dans laquelle une viscosité de ladite matière d'étanchéité est dans la plage allant de 70 à 130 Pa.s/ 2,5 t/min à une température de 25°C.

3. Matière d'étanchéité selon la revendication 1, dans laquelle un temps nécessaire à la gélification de ladite matière d'étanchéité à une température de 150°C est situé entre 240 et 360 secondes.

4. Matière d'étanchéité selon la revendication 1, dans laquelle une température de transition vitreuse d'un matériau durci comprenant ladite matière d'étanchéité est située dans la plage allant de 35 à 75°C.

5. Matière d'étanchéité selon la revendication 1, comprenant en outre une particule polymère qui subit une réaction de gélification en dessous de la température de 100°C.

6. Matière d'étanchéité selon la revendication 5, dans laquelle ladite particule polymère est une particule poly(méthacrylate de méthyle) de type noyau - enveloppe, qui possède une matière en caoutchouc dans une partie interne de ladite particule polymère.

7. Dispositif d'affichage à cristal liquide, dans lequel une matière de cristal liquide est garnie entre une paire de substrats, au moins l'un desdits substrats étant un substrat en plastique, une périphérie de ladite matière de cristal liquide étant étanchéisée par une matière d'étanchéité, ladite matière d'étanchéité comprenant un composant époxy et un composant agent de durcissement :
ledit composant époxy comprenant :
une première résine époxy dérivée d'un dérivé de bisphénol et
une charge ayant une taille de particules de 2 µm ou moins, ladite charge comprenant plus d'au moins une espèce ; et
ledit composant agent de durcissement comprenant :
un composé de type thiol à plusieurs fonctions ayant un squelette d'isocyanurate ;
un composé amine tertiaire à titre de matière catalytique réactive ; et
un agent de couplage au silane,
**caractérisé en ce que** le composant époxy comprend, en outre, une seconde résine époxy dérivée d'un composé alcool, ladite seconde résine époxy ayant un squelette de bisphénol dans sa molécule, dans lequel un rapport en poids de mélange de ladite première résine époxy sur ladite seconde résine époxy est dans une plage allant de 90/10 à 60/40.

8. Dispositif d'affichage à cristal liquide selon la revendication 7, dans lequel une viscosité de ladite matière d'étanchéité est située dans une plage allant de 70 à 130 Pa.s/ 2,5 t/min à une température de 25°C.

9. Dispositif d'affichage à cristal liquide selon la revendication 7, dans lequel un temps nécessaire à la gélification de ladite matière d'étanchéité à une température de 150°C est situé entre 240 et 360 secondes.

10. Dispositif d'affichage à cristal liquide selon la revendication 7, dans lequel une température de transition vitreuse d'un matériau durci comprenant ladite matière d'étanchéité est située dans la plage allant de 35 à 75°C.

11. Dispositif d'affichage à cristal liquide selon la revendication 7, dans lequel ladite matière d'étanchéité comprend en outre une particule polymère qui subit une réaction de gélification en dessous de la température de 100°C.

12. Matière d'étanchéité selon la revendication 11, dans laquelle ladite particule polymère est une particule poly(méthacrylate de méthyle) de type noyau - enveloppe, qui possède une matière en caoutchouc dans une partie interne de ladite particule polymère.

13. Dispositif d'affichage à cristal liquide selon la revendication 7, dans lequel ladite matière de cristal liquide possède une valeur diélectrique d'anisotropie de 10 ou plus et une tension seuil de 1,5 volts ou moins.

14. Procédé de fabrication d'un dispositif d'affichage à cristal liquide, ayant au moins deux substrats comprenant un premier substrat et un deuxième substrat, au moins un substrat étant un substrat en plastique, ledit procédé comprenant les étapes consistant à :
former une électrode en ITO prévue sur lesdits premier et deuxième substrats en un motif désiré ;
former un film d'orientation sur ladite électrode en ITO ;
frotter ledit film d'orientation ;
pulvériser une particule sphérique à titre d'écarteur sur ledit premier substrat ;
sérigraphier une matière d'étanchéité sur ledit deuxième substrat ;
précuire ladite matière d'étanchéité ;
superposer ledit premier substrat avec ledit deuxième substrat pour former des substrats superposés avec ladite matière d'étanchéité entre les deux ;
comprimer lesdits substrats superposés avec une pression donnée ; et
cuire ladite matière d'étanchéité entre lesdits substrats superposés tout en comprimant lesdits substrats superposés,
dans lequel ladite matière d'étanchéité est une matière d'étanchéité selon l'une quelconque des revendications 1 à 6 et comprend une particule polymère qui subit une réaction de gélification, et une température de ladite étape de précuisson est supérieure à un commencement de gélification de ladite particule polymère.

15. Procédé de fabrication d'un dispositif d'affichage à cristal liquide, ayant au moins deux substrats comprenant un premier substrat et un deuxième substrat, au moins un substrat étant un substrat en plastique, ledit procédé comprenant les étapes consistant à :
former une électrode en ITO prévue sur lesdits premier et deuxième substrats en un motif désiré ;
former un film d'orientation sur ladite électrode en ITO ; frotter ledit film d'orientation ;
pulvériser une particule sphérique à titre d'écarteur sur ledit premier substrat ;
sérigraphier une matière d'étanchéité sur ledit deuxième substrat ;
précuire ladite matière d'étanchéité
superposer ledit premier substrat avec ledit deuxième substrat pour former des substrats superposés avec ladite matière d'étanchéité entre les deux ;
comprimer lesdits substrats superposés avec une pression donnée ;
cuire ladite matière d'étanchéité entre lesdits substrats superposés tout en comprimant lesdits substrats superposés ; et
relâcher ladite pression donnée des substrats superposés pour former ledit dispositif d'affichage à cristal liquide,
dans lequel ladite matière d'étanchéité est une matière d'étanchéité selon l'une quelconque des revendications 1 à 6 et
dans lequel une température de ladite étape de relâchement est inférieure à une température de transition vitreuse d'un matériau durci comprenant ladite matière d'étanchéité.
